(19) Europäisches Patentamt
European Patent Office
Office européen des brevets

(11) **EP 2 616 667 B1**

(12) **FASCICULE DE BREVET EUROPEEN**

(45) Date de publication et mention
de la délivrance du brevet:
**23.03.2016 Bulletin 2016/12**

(21) Numéro de dépôt: **11764813.9**

(22) Date de dépôt: **30.08.2011**

(51) Int Cl.:
*F02N 11/08* (2006.01)     *B60K 35/00* (2006.01)
*H02J 7/14* (2006.01)     *B60L 11/00* (2006.01)

(86) Numéro de dépôt international:
**PCT/FR2011/051987**

(87) Numéro de publication internationale:
**WO 2012/035231 (22.03.2012 Gazette 2012/12)**

(54) **PROCÉDÉ DE COMMANDE D'UNE INTERFACE HOMME-MACHINE D'UN VÉHICULE AUTOMOBILE**

VERFAHREN ZUR STEUERUNG EINER MENSCH-MASCHINE SCHNITTSTELLE EINES KRAFTFAHRZEUGES

METHOD FOR CONTROLLING A MAN-MACHINE INTERFACE OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.09.2010 FR 1057362**

(43) Date de publication de la demande:
**24.07.2013 Bulletin 2013/30**

(73) Titulaire: **Peugeot Citroën Automobiles SA
78140 Vélizy Villacoublay (FR)**

(72) Inventeur: **CINNERI, Patrice
F-95870 Bezons (FR)**

(56) Documents cités:
EP-A1- 0 403 051     DE-A1- 10 042 414
DE-A1- 19 541 001     DE-A1-102006 016 893
US-A- 5 130 659     US-A- 6 163 088
US-B1- 6 202 615

## Description

La présente invention revendique la priorité de la demande française 1057362 déposée le 15 Septembre 2010 dont le contenu (texte, dessins et revendications) est ici incorporé par référence.

L'invention concerne un procédé de commande d'une interface homme-machine d'un véhicule automobile. L'invention concerne également un support d'enregistrement d'informations. L'invention concerne enfin un dispositif de commande de la charge d'un supercondensateur ainsi qu'un véhicule équipé d'un tel dispositif.

L'invention s'applique en particulier aux véhicules hybrides. Par « véhicule hybride » on désigne un véhicule dont le moteur (groupe motopropulseur) comporte un moteur thermique et une machine électrique en série chacun apte à fournir un couple sur un arbre de sortie d'un vilebrequin de manière à entraîner en rotation des roues du véhicule.

Parmi ces véhicules hybrides, les véhicules intégrant la technologie « Stop and Start » permettent d'optimiser la consommation d'un véhicule en stoppant le fonctionnement du moteur thermique lorsque le véhicule est à l'arrêt et en redémarrant ce moteur thermique lorsque le conducteur du véhicule relâche la pression, par exemple, sur la pédale de frein. Le redémarrage du véhicule peut prendre la forme d'un démarrage initial, ou d'un démarrage assisté.

Par « démarrage initial » on désigne un démarrage du moteur thermique durant lequel la rotation de l'arbre de sortie du vilebrequin est initiée par un démarreur électrique. Par « démarrage assisté » on désigne un démarrage du moteur thermique durant lequel la rotation de l'arbre de sortie du vilebrequin est initiée par un alterno-démarreur.

Le démarreur et l'alterno-démarreur sont des machines électriques utilisant une source électrique telle qu'une batterie. Le fonctionnement d'un démarreur ou d'un alterno-démarreur est connu en soi. Typiquement, le démarreur ou l'alterno-démarreur entraîne en rotation l'arbre de sortie du vilebrequin jusqu'à atteindre un régime moteur prédéterminé. Par « régime moteur » on désigne une vitesse de rotation de l'arbre de sortie de vilebrequin, par exemple exprimée en tours par minute. Une fois ce régime moteur établi, un calculateur commande une injection maximale de carburant dans des cylindres de combustion du moteur thermique puis régule l'injection pour que le régime moteur se stabilise. Dès lors, le démarreur ou l'alterno-démarreur cesse d'entraîner en rotation l'arbre de sortie du vilebrequin et le moteur thermique fonctionne de manière autonome.

En phase de roulage du véhicule, l'alterno-démarreur peut fonctionner dans un mode générateur de courant pour recharger la batterie du véhicule ou alimenter un réseau de bord de ce véhicule.

Ces moteurs « Stop and Start » sont particulièrement adaptés à la conduite en milieu urbain où le nombre d'arrêts et de redémarrages est important. Toutefois, un inconvénient d'un tel type de moteur est que la puissance électrique nécessaire au démarrage du moteur thermique est conditionné, entre autre, par la température du moteur thermique. En effet, plus la température du moteur thermique est faible, plus la puissance électrique nécessaire au démarrage du moteur thermique est élevée. Dans ces conditions, il arrive que la puissance électrique délivrable par la batterie seule ne soit pas suffisante et que la machine électrique soit incapable de démarrer le moteur thermique en étant uniquement alimentée par la batterie. Dans cette description, on désigne par « température du moteur thermique» toute grandeur représentative de la température du moteur thermique telle que la température du liquide de refroidissement et/ou la température de l'huile moteur.

Afin de palier à cet inconvénient, des moteurs connus du déposant comportent un supercondensateur connecté au réseau de bord en complément de la batterie. Par « supercondensateur » on désigne un condensateur présentant une capacité par unité de surface de ses électrodes en vis-à-vis supérieure à 0,1 $F/m^2$ et de préférence supérieure à 0,3$F/m^2$. Du fait de ces propriétés, un supercondensateur présentent une densité de puissance élevée (c'est-à-dire supérieure à 1000W/kg) et une densité d'énergie élevée (c'est-à-dire supérieure à 0,5Wh/kg).

Typiquement, lors de la mise sous tension du véhicule, un test est réalisé de manière à déterminer si la batterie possède la capacité de délivrer la puissance électrique nécessaire pour permettre le démarrage du moteur thermique. Si la puissance électrique délivrable par la batterie est suffisante, le supercondensateur est électriquement isolé du réseau d'alimentation et seul la batterie alimente le démarreur ou l'alterno-démarreur. Si la puissance électrique délivrable par la batterie est insuffisante:

- le supercondensateur est connecté en parallèle avec la batterie de manière à être rechargé par la batterie, puis
- le supercondensateur est connecté en série avec la batterie de manière à apporter la puissance électrique nécessaire au démarreur ou à l'alterno-démarreur pour démarrer le moteur thermique.

Un tel moteur est par exemple décrit dans la demande de brevet FR2935156.

Un inconvénient inhérent d'un tel moteur est que lorsqu'un utilisateur met son véhicule sous tension avant de démarrer son véhicule, l'utilisateur ne sait pas s'il peut directement démarrer le véhicule, ou si un temps d'attente est nécessaire de manière à permettre la charge du supercondensateur. De plus, dans ce dernier cas, l'utilisateur ne sait pas quel est la durée minimum de ce temps d'attente.

L'invention vise à résoudre un ou plusieurs de ces inconvénients.

L'invention porte sur un procédé de commande d'une interface homme-machine d'un véhicule automobile hybride, dans lequel le procédé comprend:

a) le calcul d'un temps de charge Tc pour atteindre une consigne prédéterminée Uc de tension aux bornes d'un supercondensateur utilisé pour l'alimentation d'un démarreur électrique d'un moteur du véhicule, le calcul étant réalisé en fonction d'une mesure de la tension actuelle Ua aux bornes du supercondensateur, et

b) la commande de l'interface homme-machine pour indiquer que le démarrage du moteur peut être déclenché dès qu'une durée Δt s'est écoulée, la durée Δt étant déterminée par la relation suivante:

$$\Delta t = min\ (Tc,\ S)$$

où,

- *min* est la fonction minimum, et
- *S* est une durée prédéterminée.

Dans le procédé ci-dessus, l'utilisateur est informé par l'intermédiaire d'une interface homme-machine de la durée Δt d'attente avant de pouvoir démarrer le moteur. La durée d'attente Δt est par ailleurs plafonnée par une durée S permettant de limiter l'attente de l'utilisateur en cas de temps de charge anormalement long.

Les modes de réalisation de ce procédé peuvent comporter une ou plusieurs des caractéristiques suivantes:

- la durée Tc est calculée à partir de la relation suivante:

$$Tc = C.\frac{(Uc - Ua)}{Ich}$$

où,

- C est la capacité du supercondensateur,
- Uc est la consigne de tension,
- Ua est la tension actuelle mesurée aux bornes du supercondensateur, et
- Ich est un courant de charge du supercondensateur.

- le procédé comporte:

- la mesure d'une température du moteur thermique, et
- la commande de l'interface homme-machine pour indiquer que le démarrage du moteur thermique est possible immédiatement sans attente et l'inhibition de l'exécution de l'étape b), si la température mesurée est supérieure à une température prédéterminée, et sinon

- l'exécution des étapes a) et b).

- la température mesurée est la température d'eau de refroidissement du moteur et/ou la température d'huile.

Les modes de réalisation de ce procédé présentent en outre les avantages suivants:

- le temps de charge du supercondensateur calculé à partir de la relation décrite plus haut correspond au temps de charge du supercondensateur optimal garantissant que la puissance électrique délivrable par le supercondensateur en complément soit suffisante pour déclencher le démarrage du moteur,
- la mesure de la température du moteur permet de déterminer si la batterie seule est apte à démarrer le moteur thermique ou si le supercondensateur doit être connecté en complément, et
- la température de l'eau de refroidissement du moteur et/ou la température sont des données représentatives de la température du moteur thermique.

L'invention a également pour objet un procédé de gestion de la charge d'un supercondensateur utilisé pour l'alimentation d'un démarreur électrique d'un moteur thermique d'un véhicule automobile hybride, ce procédé comportant, en réponse au déverrouillage d'une porte du véhicule automobile,

- le déclenchement de la charge du supercondensateur, et
- l'exécution d'un procédé de commande d'une interface homme-machine du véhicule automobile conforme à l'une quelconque des revendications précédentes

L'invention a également pour objet un support d'enregistrement d'informations comprenant des instructions pour l'exécution d'un procédé décrit plus haut, lorsque ces instructions sont exécutées par un calculateur électronique.

L'invention a également pour objet un dispositif de gestion de la charge d'un supercondensateur utilisé pour l'alimentation d'un démarreur électrique d'un moteur thermique d'un véhicule automobile hybride, le dispositif comportant:

- une interface homme-machine, et
- une unité de commande programmée pour :

- calculer un temps de charge Tc pour atteindre une consigne prédéterminée de tension aux bornes du supercondensateur, le calcul étant réalisé en fonction d'une mesure de la tension actuelle aux bornes du supercondensateur, et

• commander l'interface homme-machine pour indiquer que le démarrage du moteur thermique peut être déclenché dès qu'une durée Δt s'est écoulée, la durée Δt étant déterminée par la relation suivante:

$$\Delta t = min\ (Tc,\ S)$$

où,

• *min* est la fonction minimum, et
• S est une durée prédéterminée.

Les modes de réalisation de ce dispositif peuvent comporter une ou plusieurs des caractéristiques suivantes:

■ dispositif, dans lequel:

- le dispositif comprend un capteur d'une température du moteur, et
- l'unité de commande est également programmée pour :

  • commander l'interface homme-machine pour indiquer que le démarrage du moteur thermique est possible immédiatement sans attendre que la durée Δ*t* s'écoule et inhiber l'exécution de l'étape b), si la température mesurée par le capteur est supérieure à une température prédéterminée, et sinon
  • exécuter les étapes a) et b).

■ l'interface homme machine comporte un voyant lumineux.

L'invention a enfin pour objet un véhicule équipé d'un dispositif décrit plus haut.
D'autres caractéristiques et avantages de l'invention ressortiront clairement de la description qui en est faite ci-après, à titre indicatif et nullement limitatif, en référence aux dessins annexés, dans lesquels :

• la figure 1 est une illustration schématique partielle d'un véhicule automobile équipé d'un dispositif de commande d'une interface homme-machine et de la charge d'un supercondensateur, et
• la figure 2 est un organigramme d'un procédé de gestion de la charge du supercondensateur de la figure 1.

Dans la suite de cette description, les caractéristiques et fonctions bien connues de l'homme du métier ne sont pas décrites en détail.

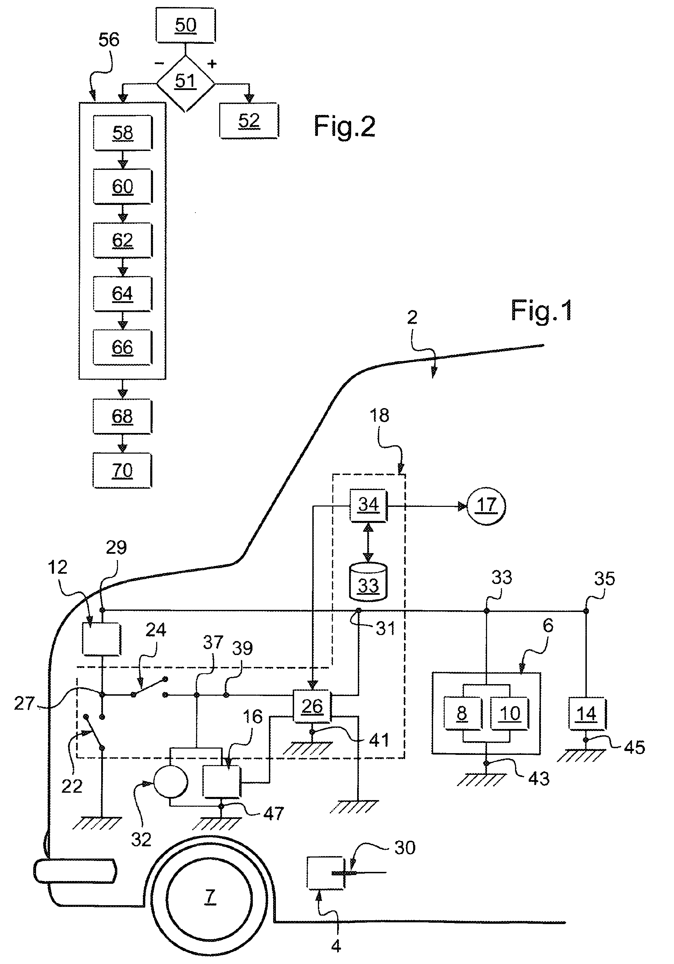

La figure 1 représente un véhicule hybride 2. Par exemple, le véhicule 2 est un véhicule automobile tel qu'une voiture. Ici, le véhicule 2 intègre une technologie de type « Stop and Start ».
A cet effet, le véhicule 2 comporte un moteur thermique 4 et une machine électrique 6. Le moteur thermique 4 et la machine 6 sont chacun aptes à fournir un couple sur un arbre de sortie d'un vilebrequin (non représenté) de manière à entraîner en rotation des roues motrices 7. Afin de simplifier la figure 1 seule une roue est représentée. Dans la suite de la description, on désigne par « moteur » l'ensemble formé par le moteur thermique 4 et la machine électrique 6.
La machine électrique 6 comprend un démarreur 8 et un alterno-démarreur 10 permettant la mise en oeuvre d'un démarrage initial et d'un démarrage assisté du véhicule 2. Le démarreur 8 et l'alterno-démarreur 10 sont connus en soi, aussi ils ne sont pas décrits en détail.
Le véhicule 2 comporte une batterie 12 alimentant la machine électrique 6 et un réseau de bord 14. Dans l'exemple, la batterie 12 possède une tension nominale de 12V. Ici, la batterie 12 est une batterie au plomb. Le réseau de bord 14 comporte par exemple un autoradio, un système de climatisation, et/ou un système d'éclairage extérieur du véhicule 2.
Le véhicule 2 comporte également un supercondensateur 16 destiné à être connecté:

• en série avec la batterie 12 de manière à pouvoir apporter un surplus d'énergie électrique au démarreur 8 ou à l'alterno-démarreur 10 lorsque la tension aux bornes de la batterie 12 est trop faible pour que la machine 6 soit capable de démarrer le moteur thermique 4 en étant uniquement alimentée par la batterie 12, et en alternance
• en parallèle avec la batterie 12 de manière à être chargé par cette batterie 12.

Le véhicule 2 comporte également une interface homme-machine 17 pour indiquer à un utilisateur, lors de la mise sous tension du véhicule 2, si le démarrage du moteur thermique 4 peut être déclenché immédiatement ou si un temps d'attente est nécessaire pour permettre la charge du supercondensateur 16 avant de déclencher le démarrage du moteur.
Dans cet exemple, l'interface homme-machine 17 est un voyant lumineux. Ce voyant lumineux est par exemple disposé sur un tableau de bord du véhicule 2. Ici, le voyant est allumé lorsqu'il est préférable que l'utilisateur attende la charge du supercondensateur 16 avant de déclencher le démarrage du véhicule 2. A l'inverse, le voyant est éteint lorsque l'utilisateur peut déclencher le démarrage sans attente.
Le véhicule 2 comporte enfin un dispositif 18 de commande de la charge du supercondensateur 16 et de commande de l'interface homme-machine 17.
Le dispositif 18 comprend un convertisseur DC/DC 26 permettant, lorsque le supercondensateur 16 est chargé par la batterie 12, de contrôler la tension aux bornes du supercondensateur 16 et de contrôler le courant de charge Ich délivré par la batterie 12 au supercondensateur 16.

Le dispositif 18 comprend également des commutateurs 22, 24. Dans la suite de cette description, un commutateur est dit « passant » lorsqu'il est apte à être traversé par un courant électrique. A l'inverse, un commutateur est dit « ouvert » lorsqu'il n'est pas apte à être traversé par un courant électrique.

Les commutateurs 22, 24 connectent le convertisseur 26 et la batterie 12 suivant différentes configurations:

- Une configuration C1 dans laquelle le supercondensateur 16 est chargé par la batterie 12.
- Une configuration C2 dans laquelle le supercondensateur 16 alimente la machine 6 en soutient de la batterie 12.
- Une configuration C3 dans laquelle le supercondensateur 16 est électriquement isolé du réseau de bord 14.

A cet effet, le commutateur 22 est raccordé entre une borne 27 de la batterie 12 et à la masse. L'autre borne 29 de la batterie 12 est connectée à une borne 31 du convertisseur 26, à une borne 33 de la machine électrique 6, et à une borne 35 du réseau de bord 14. Le commutateur 24 est raccordé entre la borne 27 et une borne 37 de connexion à un électrode du supercondensateur 16. Cette borne 37 est par ailleurs connectée à une borne 39 du convertisseur 26. Une borne 47 de connexion à l'autre électrode du supercondensateur 16 est raccordée à la masse du véhicule 2. De même, le convertisseur 26, la machine 6 et le réseau 14 sont raccordés à la masse par des bornes respectivement 41, 43 et 45.

Dans la configuration C1, le supercondensateur 16 et la batterie 12 sont connectés en parallèle. A cet effet, le commutateur 22 est passant, le commutateur 24 est ouvert, et le convertisseur 26 régule le courant de charge Ich délivré par la batterie 12 autour d'une valeur constante.

Dans la configuration C2, la batterie 12 et le supercondensateur 16 sont connectés en série. A cet effet, le commutateur 22 est ouvert, le commutateur 24 est passant, et le convertisseur 26 agit comme un commutateur ouvert de manière à empêcher le courant en provenance de la batterie 12 d'alimenter le supercondensateur 16. Dans ces conditions, la tension aux bornes de la machine 6 est égale à la somme des tensions aux bornes de la batterie 12 et du supercondensateur 16.

Dans la configuration C3, le commutateur 22 est passant, le commutateur 24 est ouvert et le convertisseur 26 agit comme un commutateur ouvert de manière à empêcher le courant en provenance de la batterie 12 d'alimenter le supercondensateur 16.

Le dispositif 18 comporte également des capteurs 30, 32. Le capteur 30 mesure la température du moteur thermique 4. Ici, le capteur 30 mesure la température d'eau de refroidissement du moteur thermique 4.

Le capteur 32 mesure la tension aux bornes du supercondensateur 16.

Le dispositif 18 comporte enfin une unité de commande 34 apte à:

- réceptionner les mesures issues des capteurs 30, 32,
- traiter ces mesures, et
- commander les commutateurs 22, 24, l'interface homme-machine 17 et le convertisseur 26 en fonction d'un résultat de ce traitement.

A cet effet, l'unité 34 est électriquement connectée aux commutateurs 22, 24, à l'interface homme-machine 17, aux capteurs 30, 32 et au convertisseur 26. Afin de simplifier les dessins les connexions électriques entre l'unité 34 et les capteurs 30, 32 et les commutateurs 22, 24 ne sont pas représentées.

Dans cet exemple, l'unité de commande 34 est réalisée à partir d'un calculateur électronique programmable apte à exécuter des instructions enregistrées sur un support d'enregistrement d'informations. L'unité 34 est ici raccordée à une mémoire 33 contenant des instructions pour l'exécution du procédé de la figure 2.

Un procédé de commande de la charge du supercondensateur du dispositif 18 va maintenant être décrit en référence à la figure 2.

Lors d'une étape 50, un utilisateur du véhicule 2 met sous tension l'unité de commande 34. Par exemple, la mise sous tension de l'unité 34 est déclenchée par le déverrouillage du véhicule 2 par l'intermédiaire d'une télécommande (également appelée « plip » dans le domaine automobile). Dans l'exemple, suite à la mise sous tension de l'unité 34, l'unité 34 commande l'interface homme-machine 17 de manière à allumer le voyant lumineux.

Lors d'une étape 51, l'unité 34 détermine si la machine 6 est capable de démarrer le moteur thermique 4 en étant uniquement alimentée par la batterie 12 ou si le supercondensateur 16 doit être connecté en soutien. A cet effet, l'unité 34 réceptionne une mesure issue du capteur 30 et compare cette mesure à une température Ts prédéterminée.

La température Ts correspond à une température du moteur en deçà de laquelle la machine 6 est incapable de démarrer le moteur thermique 4 en étant uniquement alimentée par la batterie 12. Cette température Ts est par exemple déterminée lors de la conception du moteur.

Si la température mesurée par le capteur 30 est supérieure à la température Ts, alors la machine 6 est capable de démarrer le moteur thermique 4 en étant uniquement alimentée par la batterie 12. Il n'est alors pas nécessaire de charger le supercondensateur 16 et l'on procède à une étape 52.

Lors de l'étape 52, le dispositif 18 passe en configuration C3 et l'unité 34 commande l'interface homme-machine 17 pour indiquer à l'utilisateur que le démarrage du moteur est possible immédiatement sans attendre. Dans l'exemple, le voyant lumineux s'éteint sur le tableau de bord.

Si la température mesurée par le capteur 22 est inférieure ou égale à la température Ts, alors il est préférable de démarrer le moteur thermique 4 en alimentant la machine 6 à partir de la batterie 12 et du supercondensateur 16. Dans ce cas, lors d'une étape 56, le supercondensateur 16 est mis en charge et l'on procède successivement aux opérations 58, 60, 62, 64, et 66.

Lors de l'opération 58, le dispositif 18 passe en configuration C1 de manière à charger le supercondensateur 16.

Lors de l'opération 60, l'unité 34 détermine une consigne de tension Uc pour le supercondensateur 16. La consigne Uc est la tension à atteindre aux bornes du supercondensateur 16 pour un démarrage optimal du moteur 4 avec la machine 6. Par exemple, la consigne Uc est une constante prédéterminée.

Lors de l'opération 62, l'unité 34 mesure la tension actuelle Ua aux bornes du supercondensateur 16.

Lors de l'opération 64, le courant de charge Ich est déterminé. Le courant de charge peut être une caractéristique intrinsèque du convertisseur 26 invariable ou au contraire peut être une caractéristique variable commandée dynamiquement par l'unité 34.

Enfin, lors de l'opération 66 un temps de charge Tc est calculé. Le temps Tc correspond au temps nécessaire pour que la tension aux bornes du supercondensateur 16 passe de la tension actuelle Ua à la consigne de tension Uc. Ici, le temps de charge est calculé à l'aide de la relation suivante:

$$Tc = C.\frac{(Uc - Ua)}{Ich} \text{ (relation R1)}$$

où,

- C est la capacité du supercondensateur (donnée par le fabriquant),
- Uc est la consigne de tension,
- Ua est la tension actuelle mesurée aux bornes du supercondensateur, et
- Ich est le courant de charge du supercondensateur.

Une fois le temps Tc calculé, lors d'une étape 68 une durée d'attente de l'utilisateur $\Delta t$ est déterminée. La durée $\Delta t$ correspond à la durée d'allumage du voyant sur l'interface 17.

Dans l'exemple, la durée $\Delta t$ est déterminée par la relation suivante:

$$\Delta t = min\ (Tc,\ S)\ \text{(relation R2)}$$

où,

- *min* est la fonction minimum, et
- S est une durée prédéterminée.

Le seuil S est une constante prédéterminée. Par exemple, le seuil S est fixé par le constructeur à 30s, 40s, 50s ou 60s.

Lors d'une étape 70, l'unité 34 commande l'interface homme-machine 17 pour indiquer que le démarrage du moteur peut être déclenché dès que la durée $\Delta t$ s'est écoulée. Par exemple, lorsque la durée $\Delta t$ s'est écoulée à partir du moment où la tension Ua a été mesuré, le voyant lumineux s'éteint sur le tableau de bord indiquant à l'utilisateur qu'il peut démarrer le moteur.

Si la durée $\Delta t$ déterminée lors de l'étape 68 est égale au temps Tc alors le supercondensateur 16 est chargé jusqu'à la tension Uc et la probabilité de succès du démarrage est élevée.

Si la durée $\Delta t$ déterminée lors de l'étape 68 est égale à la durée S, alors le supercondensateur 16 n'est pas chargé jusqu'à la consigne de tension Uc et la probabilité de succès du démarrage est plus faible. Aussi, la durée S est avantageusement déterminée de manière à réaliser un compromis entre la durée du temps d'attente de l'utilisateur et la probabilité de succès du démarrage.

Lorsque le conducteur déclenche le démarrage du moteur, le dispositif 18 passe automatiquement et immédiatement en configuration C2. Le démarrage du moteur thermique est par exemple déclenché en tournant une clé de contact. De préférence, le conducteur déclenche le démarrage en respectant le temps d'attente indiqué par l'interface 17. Toutefois, il peut aussi déclencher le démarrage avant que la durée $\Delta t$ se soit écoulée. Dans ce dernier cas, il réduit la probabilité de succès du démarrage.

De nombreux autres modes de réalisation sont possibles.

Le véhicule 2 peut comporter plus d'un supercondensateur. Par exemple, le supercondensateur 16 peut être remplacé par un ensemble de supercondensateurs connectés en série.

Le capteur 30 peut mesurer une autre grandeur représentative de la température du moteur thermique 4. Le capteur 30 peut par exemple mesurer la température de l'huile moteur.

Le convertisseur 26 peut être omis du dispositif 18 et remplacé par un commutateur ouvert en permanence.

Le temps de précharge Tc n'est pas nécessairement calculé. Afin d'augmenter la vitesse d'exécution du procédé de la figure 2 une cartographie peut être réalisé à l'aide de la relation R1 lors de l'étape de calibration 50, et mémorisée dans la mémoire 33. Dans ce cas, lors de l'opération 66, l'unité 34 lit dans la mémoire 33 le temps Tc associé à la mesure de tension Ua et à la consigne de tension Uc.

La mise sous tension de l'unité 34 est de préférence réalisée le plus tôt possible avant démarrage du véhicule 2 pour anticiper la charge du supercondensateur 16. Cependant, la mise sous tension de l'unité 34 n'est pas nécessairement réalisée lors du déverrouillage d'une porte du véhicule 2 à l'aide d'une télécommande. Cette mise sous tension peut être réalisée lors de l'ouverture manuelle d'une porte du véhicule 2 ou encore lorsque la clé est introduite dans la serrure de contact d'allumage du véhicule 2 plus connu sous le terme de « neiman » du véhicule.

Afin de minimiser plus encore le temps de charge du supercondensateur 16, lors de l'étape 50, le dispositif 18 enclenche immédiatement la charge du supercondensateur 16 en prévision d'une éventuelle utilisation du supercondensateur 16.

Enfin, le déclenchement ou non de la charge du supercondensateur d'un véhicule hybride à partir d'une mesure de la température du moteur peut être mis en oeuvre indépendamment de la mise en oeuvre du procédé de commande de l'interface homme-machine.

**Revendications**

1. Procédé de commande d'une interface homme-machine d'un véhicule automobile hybride, **caractérisé en ce que** ce procédé comprend:

    a) le calcul (66) d'un temps de charge Tc pour atteindre une consigne prédéterminée Uc de tension aux bornes d'un supercondensateur utilisé pour l'alimentation d'un démarreur électrique d'un moteur thermique du véhicule, le calcul étant réalisé en fonction d'une mesure (62) de la tension actuelle Ua aux bornes du supercondensateur, et

    b) la commande (70) de l'interface homme-machine pour indiquer que le démarrage du moteur thermique peut être déclenché dès qu'une durée Δt s'est écoulée, la durée Δt étant déterminée (68) par la relation suivante:

$$\Delta t = min\ (Tc,\ S)$$

où,

    • *min* est la fonction minimum, et
    • S est une durée prédéterminée.

2. Procédé selon la revendication 1, dans lequel la durée Tc est calculée (66) à partir de la relation suivante:

$$Tc = C.\frac{(Uc - Ua)}{Ich}$$

où,

    • C est la capacité du supercondensateur,
    • Uc est la consigne de tension,
    • Ua est la tension actuelle mesurée aux bornes du supercondensateur, et
    • Ich est un courant de charge du supercondensateur.

3. Procédé selon l'une quelconque des revendications précédentes, dans lequel le procédé comporte:

    - la mesure (51) d'une température du moteur thermique, et
    - la commande (52) de l'interface homme-machine pour indiquer que le démarrage du moteur thermique est possible immédiatement sans attente et l'inhibition de l'exécution de l'étape b), si la température mesurée est supérieure à une température prédéterminée, et sinon
    - l'exécution (62, 66, 70) des étapes a) et b).

4. Procédé selon la revendication 3, dans lequel la température mesurée est la température d'eau de refroidissement du moteur et/ou la température d'huile.

5. Procédé de gestion de la charge d'un supercondensateur utilisé pour l'alimentation d'un démarreur électrique d'un moteur thermique d'un véhicule automobile hybride, **caractérisé en ce qu'**il comporte, en réponse au déverrouillage d'une porte du véhicule automobile :

    - le déclenchement (58) de la charge du supercondensateur, et
    - l'exécution d'un procédé de commande d'une interface homme-machine du véhicule automobile conforme à l'une quelconque des revendications précédentes.

6. Support d'enregistrement d'informations, **caractérisé en ce qu'**il comprend des instructions pour l'exécution d'un procédé conforme à l'une quelconque des revendications précédentes, lorsque ces instructions sont exécutées par un calculateur électronique.

7. Dispositif de gestion de la charge d'un supercondensateur (16) utilisé pour l'alimentation d'un démarreur électrique (8,10) d'un moteur (4,6) thermique d'un véhicule (2) automobile hybride, **caractérisé en ce que** le dispositif comporte:

    - une interface homme-machine (17), et
    - une unité de commande (34) programmée pour :

        • calculer un temps de charge Tc pour atteindre une consigne prédéterminée de tension aux bornes du supercondensateur (16), le calcul étant réalisé en fonction d'une mesure de la tension actuelle aux bornes du supercondensateur (16), et

• commander l'interface homme-machine (17) pour indiquer que le démarrage du moteur thermique peut être déclenché dès qu'une durée Δt s'est écoulée, la durée Δt étant déterminée par la relation suivante:

$$\Delta t = min\ (Tc,\ S)$$

où,
• *min* est la fonction minimum, et
• *S* est une durée prédéterminée.

8. Dispositif selon la revendication 7, dans lequel:

- le dispositif (18) comprend un capteur (30) d'une température du moteur, et
- l'unité de commande (34) est également programmée pour :

• commander l'interface homme-machine (17) pour indiquer que le démarrage du moteur thermique est possible immédiatement sans attendre que la durée *Δt* s'écoule et inhiber l'exécution de l'étape b), si la température mesurée par le capteur (30) est supérieure à une température prédéterminée, et sinon
• exécuter les étapes a) et b).

9. Dispositif (18) selon les revendications 7 à 8, dans lequel l'interface homme-machine (17) comporte un voyant lumineux.

10. Véhicule (2), **caractérisé en ce qu'**il est équipé d'un dispositif (18) conforme à l'une quelconque des revendications 7 à 9.

**Patentansprüche**

1. Verfahren zur Steuerung einer Mensch-Maschine-Schnittstelle eines Hybridkraftfahrzeugs, **dadurch gekennzeichnet, dass** dieses Verfahren Folgendes umfasst:

a) die Berechnung (66) einer Ladezeit Tc, um einen vorbestimmten Spannungssollwert Uc an den Klemmen eines Superkondensators zu erzielen, der zur Versorgung eines elektrischen Anlassers einer Brennkraftmaschine des Fahrzeugs verwendet wird, wobei die Berechnung in Abhängigkeit von einer Messung (62), der aktuellen Spannung Ua an den Klemmen des Superkondensators ausgeführt wird, und
b) die Steuerung (70) der Mensch-Maschine-Schnittstelle, um anzugeben, dass das Anlassen der Brennkraftmaschine ausgelöst werden kann, sobald eine Dauer Δt abgelaufen ist, wobei die Dauer Δt durch die folgende Gleichung bestimmt wird (68):

$$\Delta t = min.(Tc, S)$$

wobei

• *min* die Mindestfunktion ist, und
• *S* eine vorbestimmte Dauer ist.

2. Verfahren nach Anspruch 1, wobei die Dauer Tc ausgehend von der folgenden Gleichung berechnet wird (66):

$$Tc = C.\frac{(Uc - Ua)}{Ich},$$

wobei

• C die Kapazität des Superkondensators ist,
• Uc der Spannungssollwert ist,
• Ua die aktuelle Spannung ist, die an den Klemmen des Superkondensators gemessen wird, und
• Ich ein Ladestrom des Superkondensators ist.

3. Verfahren nach einem der vorhergehenden Ansprüche, wobei das Verfahren Folgendes umfasst:

- die Messung (51) einer Temperatur der Brennkraftmaschine, und
- die Steuerung (52) der Mensch-Maschine-Schnittstelle, um anzugeben, dass das Anlassen der Brennkraftmaschine unmittelbar ohne Warten möglich ist, und die Inhibition der Ausführung des Schritts b), falls die gemessene Temperatur größer ist als eine vorbestimmte Temperatur, und anderenfalls
- die Ausführung (62, 66, 70) der Schritte a) und b).

4. Verfahren nach Anspruch 3, wobei die gemessene Temperatur die Kühlwassertemperatur der Maschine und/oder die Öltemperatur ist.

5. Verfahren zur Verwaltung der Ladung eines Superkondensators, der für die Versorgung eines elektrischen Anlassers einer Brennkraftmaschine eines Hybridkraftfahrzeugs verwendet wird, **dadurch gekennzeichnet, dass** es als Reaktion auf das Entriegeln einer Tür des Kraftfahrzeugs Folgendes umfasst:

- das Auslösen (58) des Ladens des Superkondensators, und
- das Ausführen eines Steuerverfahrens einer Mensch-Maschine-Schnittstelle des Kraftfahrzeugs nach einem der vorhergehenden Ansprüche.

6. Datenaufzeichnungsträger, **dadurch gekennzeichnet, dass** er Anweisungen zur Ausführung eines Verfahrens nach einem der vorhergehenden Ansprüche umfasst, wenn diese Anweisungen durch einen elektronischen Rechner ausgeführt werden.

7. Verfahren zur Verwaltung der Ladung eines Superkondensators (16), der zur Versorgung eines elektrischen Anlassers (8, 10) einer Brennkraftmaschine (4, 6) eines Hybridkraftfahrzeugs (2) verwendet wird, **dadurch gekennzeichnet, dass** die Vorrichtung Folgendes umfasst:

- eine Mensch-Maschine-Schnittstelle (17), und
- eine Steuereinheit (34), die programmiert ist, um:

• eine Ladezeit Tc zu berechnen, um einen vorbestimmten Spannungssollwert an den Klemmen des Superkondensators (16) zu erreichen, wobei die Berechnung in Abhängigkeit von einer Messung der aktuellen Spannung an den Klemmen des Superkondensators (16) ausgeführt wird, und
• die Mensch-Maschine-Schnittstelle (17) zu steuern, um anzugeben, dass das Anlassen der Brennkraftmaschine ausgelöst werden kann, sobald eine Dauer Δt abgelaufen ist, wobei die Dauer Δt durch die folgende Gleichung bestimmt wird:

$$\Delta t = \min.(Tc, S)\ ,$$

wobei
• *min* die Mindestfunktion ist, und
• S eine vorbestimmte Dauer ist.

8. Vorrichtung nach Anspruch 7, wobei:

- die Vorrichtung (18) einen Fühler (30) einer Temperatur der Maschine umfasst, und
- die Steuereinheit (34) auch programmiert ist, um:

• die Mensch-Maschine-Schnittstelle (17) zu steuern, um anzugeben, dass das Anlassen der Brennkraftmaschine sofort ohne Warten, dass die Dauer Δt abläuft, möglich ist, und die Ausführung des Schritts b) zu inhibieren, falls die von dem Sensor (30) gemessene Temperatur größer ist als eine vorbestimmte Temperatur, und anderenfalls
• die Schritte a) und b) auszuführen.

9. Vorrichtung (18) nach den Ansprüchen 7 bis 8, wobei die Mensch-Maschine-Schnittstelle (17) eine Leuchtanzeige umfasst.

10. Fahrzeug (2), **dadurch gekennzeichnet, dass** es mit einer Vorrichtung (18) nach einem der Ansprüche 7 bis 9 ausgestattet ist.

## Claims

1. A method for controlling a man-machine interface of a hybrid motor vehicle, **characterized in that** this method includes:

a) calculating (66) a charge time Tc in order to reach a predetermined voltage set value Uc at the terminals of a supercapacitor used to power an electric starter of a heat engine of the vehicle, said calculation being performed as a function of a measurement (62) of the current voltage Ua at the terminals of the supercapacitor, and
b) controlling (70) the man-machine interface in order to indicate that the start-up of the heat engine can be triggered once a time period Δt has elapsed, said time period Δt being determined (68) by the following relationship:

$$\Delta t = min\ (Tc,\ S)$$

wherein

• *min* is the minimum function, and
• *S* is a predetermined time period.

2. The method according to Claim 1, in which the time period Tc is calculated (66) from the following relationship:

$$Tc = C.\frac{(Uc - Ua)}{Ich}$$

wherein

• C is the capacity of the supercapacitor,

• Uc is the voltage set value,
• Ua is the current voltage measured at the terminals of the supercapacitor, and
• Ich is a charging current of the supercapacitor.

**3.** The method according to any one of the preceding claims, in which the method comprises:

- measuring (51) a temperature of the heat engine, and
- controlling (52) the man-machine interface in order to indicate that the start-up of the heat engine is possible immediately without waiting and the inhibition of the execution of step b), if the measured temperature is greater than a predetermined temperature, and if not
- the execution (62, 66, 70) of steps a) and b).

**4.** The method according to Claim 3, in which the measured temperature is the coolant temperature of the engine and/or the oil temperature.

**5.** A method for managing the charge of a supercapacitor used for the supply of an electric starter of a heat engine of a hybrid motor vehicle, **characterized in that** it comprises, in response to the unlocking of a door of the motor vehicle:

- the triggering (58) of the charge of the supercapacitor, and
- the execution of a method for controlling a man-machine interface of the motor vehicle according to any one of the preceding claims.

**6.** An information recording medium, **characterized in that** it includes instructions for the execution of a method according to any one of the preceding claims, when these instructions are executed by an electronic computer.

**7.** A device for managing the charge of a supercapacitor (16) used for the supply of an electric starter (8, 10) of a heat engine (4, 6) of a hybrid motor vehicle (2), **characterized in that** the device comprises:

- a man-machine interface (17), and
- a programmed control unit (34) for:

• calculating a charge time Tc in order to reach a predetermined voltage set value at the terminals of the supercapacitor (16), the calculation being realized as function of a measurement of the current voltage at the terminals of the supercapacitor (16), and
• controlling the man-machine interface (17) in order to indicate that the start-up of the heat engine can be triggered as soon as a time period $\Delta t$ has elapsed, the time period

$\Delta t$ being determined by the following relationship:

$$\Delta t = min\ (Tc,\ S)$$

wherein
• *min* is the minimum function, and
• *S* is a predetermined duration.

**8.** The device according to Claim 7, in which:

- the device (18) includes a sensor (30) of a temperature of the engine, and
- the control unit (34) is also programmed for:

• controlling the man-machine interface (17) in order to indicate that the start-up of the heat engine is possible immediately without waiting for the time period $\Delta t$ to have elapsed and to inhibit the execution of step b) if the temperature measured by the sensor (30) is greater than a predetermined temperature, and if not
• executing the steps a) and b).

**9.** The device (18) according to Claims 7 to 8, in which the man-machine interface (17) comprises an indicator light.

**10.** A vehicle (2), **characterized in that** it is equipped with a device (18) according to any one of Claims 7 to 9.

Fig.2

Fig.1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1057362
- FR 2935156